# EUROPÄISCHE PATENTANMELDUNG

(11) **EP 0 521 241 A1**
(43) Veröffentlichungstag der Anmeldung: **07.01.1993**
(21) Anmeldenummer: 92103708.1
(22) Anmeldetag: 04.03.1992
(51) Int. Cl.: C02F 7/00, C02F 3/18, A01K 63/04

(54) **Vorrichtung zum Anreichern von Gewässern mit Sauerstoff**

(30) Priorität: 25.06.1991 DE 4120890
(71) Anmelder: SANWA SEIDLITZ GMBH, D-34549 Edertal (DE)
(72) Erfinder: Seidlitz, Ulrich, W-3593 Edertal-Rehbach (DE)
(74) Vertreter: Walther, Horst, Dipl.-Ing.

(57) **Zusammenfassung**

Die Vorrichtung zur Anreicherung von Gewässern mit Sauerstoff, die der Aufzucht und dem Transport von Fischen dienen, weist einen Hüllkörper (1) auf, wobei innerhalb des Hüllkörpers (1) eine im Bereich der Wasseroberfläche angeordnete rotierende Bürste (4) vorgesehen ist, und wobei in den Hüllkörper (1) Sauerstoff eingespeist wird.

## Beschreibung

Die Erfindung betrifft eine Vorrichtung zum Anreichern von Gewässern mit Sauerstoff, die der Aufzucht und dem Transport von Fischen dienen.

Die Aufzucht von Fischen erfolgt in sogenannten Fischteichen; der Transport von lebenden Fischen auf Lastkraftwagen erfolgt in dafür vorgesehenen Behältern.

Aus dem deutschen Gebrauchsmuster G 8802347.8 ist eine Vorrichtung der eingangs genannten Art bekannt. Hierbei wird das Wasser unter Bildung eines dünnen Wasserfilms mit Sauerstoff angereichert. Diese Anlage arbeitet im stationären Betrieb, außerhalb des eigentlichen Behälters oder des Fischteiches. Das bedeutet, daß derart mit Sauerstoff angereichertes Wasser nach erfolgter Anreicherung in das Gewässer zurückgeführt werden muß. Insbesondere bei Anwendung dieses Verfahrens bei großen Fischzuchtbecken ergibt sich hierbei, daß im Bereich der Einleitung des so angereicherten Wassers eine relativ hohe Sauerstoffkonzentration zu verzeichnen ist; hingegen mit zunehmendem Abstand von dem Ort der Einleitung des mit Sauerstoff angereicherten Wassers der Sauerstoffgehalt in dem Gewässer stark abnimmt.

Es ist zwar möglich, durch die Anordnung entsprechender Rohrleitungen um ein derartiges Becken bzw. Gewässer herum das mit Sauerstoff angereicherte Wasser an mehreren Stellen des Beckens einzuleiten, jedoch erfordert dies die Installation eines langen und damit teuren Rohrleitungssystems. Auch die Wartung eines solchen Rohrleitungssystems ist kostenaufwendig.

Der Erfindung liegt daher die Aufgabe zugrunde, eine Vorrichtung der eingangs genannten Art zu schaffen, bei der das gesamte Gewässer innerhalb eines bestimmten Zeitraumes gleichmäßig mit Sauerstoff angereichert werden kann, wobei sichergestellt sein soll, daß die zugeführte Sauerstoffmenge nach Möglichkeit vollständig vom Wasser aufgenommen wird, so daß der Verlust an Sauerstoff möglichst gering gehalten wird.

Die Aufgabe wird erfindungsgemäß gelöst durch einen vorzugsweise schwimmenden Hüllkörper, wobei innerhalb des Hüllkörpers eine im Bereich der Wasseroberfläche angeordnete rotierende Bürste vorgesehen ist, und wobei in den Hüllkörper Sauerstoff eingespeist wird. Vorteilhaft ist hierbei die Bürste in einem Abstand derart zur Wasseroberfläche in dem Hüllkörper angeordnet, daß die Borsten die Wasseroberfläche berühren, so daß bei einer bestimmten Rotationsgeschwindkeit der Bürste ein feiner Wassernebel entsteht. Es ist bekannt, daß die Sauerstoffaufnahme von Wasser abhängig ist von der sich bildenden Wasseroberfläche.

Durch die Schaffung eines Wassernebels wird diese Oberfläche im Gegensatz zu dem bekannten System erheblich erhöht, so daß eine erhebliche Steigerung der Sauerstoffaufnahme verzeichnet werden kann.

Eine derart ausgebildete Vorrichtung kann aufgrund ihrer Schwimmfähigkeit, die durch das unter dem Hüllkörper vorhandene Sauerstoffkissen bewirkt wird, an jeden beliebigen Ort des Gewässers gebracht werden. Im einzelnen ist der Hüllkörper als Halbkugel ausgebildet, beispielsweise aus Kunststoff, wobei die Halbkugel einen sich horizontal erstreckenden Rand aufweist. Durch den horizontal sich erstreckenden umlaufenden Rand wird eine gewisse Stabilisierung der Schwimmeigenschaften der gesamten Vorrichtung erreicht. Eine weitere Erhöhung der Stabilität wird dadurch erreicht, daß in dem Hüllkörper bzw. der Halbkugel ein als umlaufender Schlauch ausgebildeter Schwimmkörper angeordnet ist.

Nach einem weiteren besonderen Merkmal weist der Hüllkörper mindestens eine seitliche Öffnung auf, deren Abstand von der Wasseroberfläche so gewählt ist, daß der Hüllkörper bzw. die Bürste immer eine bestimmte Eintauchtiefe aufweist. Im Normalfall befindet sich die Öffnung in dem Hüllkörper im Bereich der Wasseroberfläche. Befindet sich die Öffnung unterhalb der Wasseroberfläche, wird innerhalb kürzester Zeit der Gasdruck innerhalb des Hüllkörpers stark ansteigen, mithin der gesamten Vorrichtung mehr Auftrieb verleihen.

Umgekehrt gilt, daß bei zu großem Abstand der Öffnung zur Wasseroberfläche überschüssiger Sauerstoff aus der Öffnung abgegeben wird, mithin der Gastdruck in dem Hüllkörper sinkt und hierdurch ein Absinken der gesamten Vorrichtung bewirkt wird.

In der Zeichnung ist eine beispielsweise Ausführungsform dargestellt.

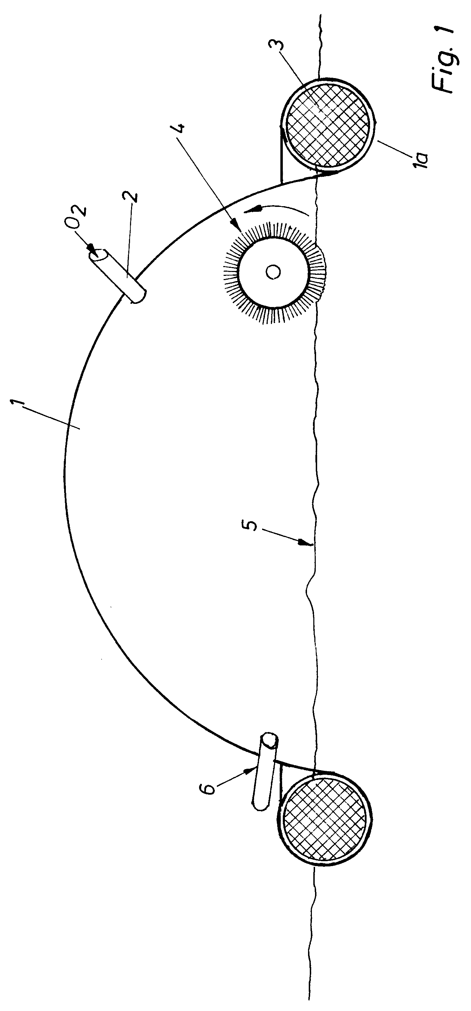

- Fig. 1: zeigt die Vorrichtung in einer Seitenansicht im Schnitt;

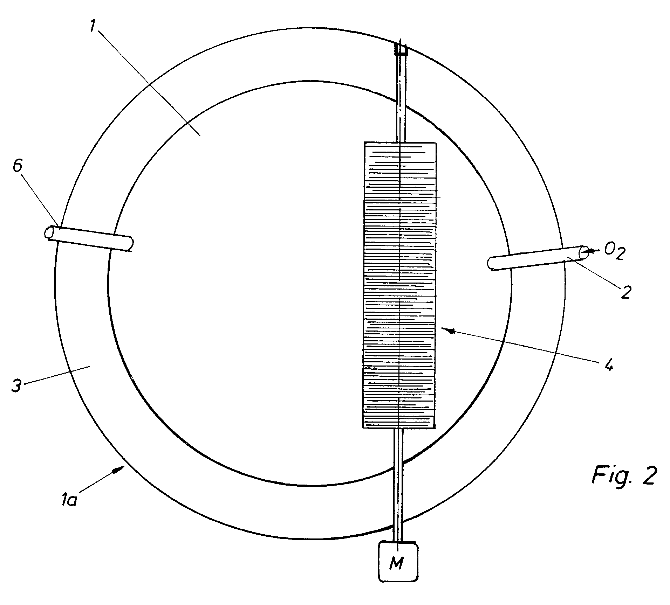

- Fig. 2: zeigt eine Draufsicht.

Die mit 1 bezeichnete als Hüllkörper ausgebildete Halbkugel besitzt eine Öffnung 2 für die Zuführung von Sauerstoff. Die Halbkugel 1 besitzt darüber hinaus einen seitlichen Rand 1a, der einen umlaufenden Schlauch 3 aufnimmt. Innerhalb der Halbkugel 1 befindet sich eine rotierende Bürste 4, die mit der Wasseroberfläche, gekennzeichnet durch die Bezugsziffer 5 in Berührung steht. Im Bereich der Wasseroberfläche 5 befindet sich eine weitere Öffnung 6, deren Abstand von der Wasseroberfläche so gewählt ist, daß die mit 4 bezeichnete Bürste mit ihren Borsten eine bestimmte Eintauchtiefe nicht über- bzw. unterschreitet. Dies ist erforderlich, um die Ausbildung eines Sprühnebels innerhalb der Halbkugel zu erreichen.

## Patentansprüche

1. Vorrichtung zur Anreicherung von Gewässern mit Sauerstoff, die der Aufzucht und dem Transport von Fischen dienen,
**gekennzeichnet durch**
einen Hüllkörper (1), wobei innerhalb des Hüllkörpers (1) eine im Bereich der Wasseroberfläche angeordnete rotierende Bürste (4) vorgesehen ist, und wobei in den Hüllkörper (1) Sauerstoff eingespeist wird.

2. Vorrichtung nach Anspruch 1,
**dadurch gekennzeichnet,** daß der Hüllkörper auf der Wasseroberfläche schwimmt.

3. Anspruch nach Anspruch 1,
**dadurch gekennzeichnet,** daß die Borsten der Bürste (4) die Wasseroberfläche (5) berühren.

4. Vorrichtung nach Anspruch 1,
**dadurch gekennzeichnet,** daß die Rotationsgeschwindkeit der Bürste (4) derart gewählt wird, daß ein Wassernebel entsteht.

5. Vorrichtung nach Anspruch 1,
**dadurch gekennzeichnet,** daß der Hüllkörper (1) als Halbkugel ausgebildet ist.

6. Vorrichtung nach Anspruch 5,
**dadurch gekennzeichnet,** daß die Halbkugel (1) einen sich horizontal erstreckenden umlaufenden Rand (1a) aufweist.

7. Vorrichtung nach Anspruch 1 oder Anspruch 4,
**dadurch gekennzeichnet,** daß der Hüllkörper (1) bzw. die Halbkugel (1) einen Schwimmkörper (3) aufweist.

8. Vorrichtung nach Anspruch 7,
**dadurch gekennzeichnet,** daß der Schwimmkörper (3) als ein an der Halbkugel (1) bzw. Hüllkörper (1) angeordneter, umlaufender Schlauch ausgebildet ist.

9. Vorrichtung nach Anspruch 2,
**dadurch gekennzeichnet,** daß der Hüllkörper (1) im Bereich der Wasseroberfläche (5) eine Öffnung (6) aufweist, deren Abstand von der Wasseroberfläche (5) so gewählt ist, daß der Hüllkörper (1) bzw. die Bürste (4) immer eine bestimmte Eintauchtiefe aufweist.
